# EUROPÄISCHE PATENTSCHRIFT

(11) **EP 2 382 250 B1**
(45) Veröffentlichungstag und Bekanntmachung des Hinweises auf die Patenterteilung: **16.05.2018**
(21) Anmeldenummer: 09768080.5
(22) Anmeldetag: 14.12.2009
(51) Int. Cl.: C08F 297/04, C08L 25/06, C08L 25/10, C08L 53/02, C08L 51/06, C08L 51/04

(54) **PHASENSEPARIERENDE BLOCKCOPOLYMERE AUS UNVERTRÄGLICHEN HARTBLÖCKEN UND FORMMASSEN MIT HOHER STEIFIGKEIT**
PHASE-SEPARATING BLOCK COPOLYMERS COMPOSED OF INCOMPATIBLE HARD BLOCKS AND MOLDING MATERIALS WITH HIGH STIFFNESS
COPOLYMÈRES SÉQUENCÉS À SÉPARATION DE PHASE, COMPOSÉS DE BLOCS DURS INCOMPATIBLES, ET MATIÈRES DE MOULAGE DE GRANDE RIGIDITÉ

(30) Priorität: 23.12.2008 EP 08172779
(43) Veröffentlichungstag der Anmeldung: 02.11.2011
(73) Patentinhaber: INEOS Styrolution Europe GmbH, 60325 Frankfurt am Main (DE)
(72) Erfinder: KNOLL, Konrad, 68199 Mannheim (DE); KOCH, Jürgen, 67141 Neuhofen (DE); CHAROENSIRISOMBOON, Piyada, 67251 Freinsheim (DE); WAGNER, Daniel, 67098 Bad Dürkheim (DE); VERLINDEN, Geert, B-9190 Stekene (BE); WEIDISCH, Roland, 39218 Schönebeck (DE)
(74) Vertreter: Jacobi, Markus Alexander
(86) Internationale Anmeldenummer: PCT/EP2009/067012
(87) Internationale Veröffentlichungsnummer: WO 2010/072595

(56) Entgegenhaltungen:
- EP-A1- 1 669 407
- WO-A1-00/58380
- WO-A1-2009/112549
- DE-A1- 19 914 075
- US-A1- 2003 216 512

## Beschreibung

Die Erfindung betrifft ein Blockcopolymer A mit einem gewichtsmittjeren Molekulargewicht M_{w} von mindestens 100.000 g/mol, enthaltend
a) mindestens einen Block S aus 95 bis 100 Gew.-% vinylaromatischen Monomeren und 0 bis 5 Gew.-% Dienen und
b) mindestens einen Copolymerblock (S/B)_{A} aus 70 bis 75 Gew.-% Styroleinheiten und 25 bis 30 Gew.-% Butadieneinheiten mit einer Glasübergangstemperatur Tg_{A} im Bereich von 5 bis 30°C, und
c) mindestens einen Copolymerblock (S/B)_{B} aus 30 bis 50 Gew.-% Styroleinheiten und 50 bis 70 Gew.-% Butadieneinheiten mit einer Glasübergangstemperatur Tg_{B} im Bereich von 0 bis -80°C,
wobei der Gewichtsanteil der Summe aller Blöcke S im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Blockcopolymer A, liegt, und das Blockcopolymer eine lineare Struktur mit der Blockfolge Si- (S/B)_{A}-(S/B)_{B}-S₂ aufweist, wobei S₁ und S₂ jeweils für einen Block S stehen, sowie Mischungen davon und deren Verwendung.

Die US 3,639,517 beschreibt sternförmig verzweigte Styrol-Butadien-Blockcopolymere mit 75 bis 95 Gewichtsprozent endständigen Blöcken aus vinylaromatischen Monomeren und 5 bis 30 Gewichtsprozent elastomeren, überwiegend aus konjugierten Dieneinheiten bestehender Blöcke. Sie können mit Standardpolystyrol zu hochtransparente Mischungen abgemischt werden. Mit zunehmendem Anteil Polystyrol erhöht sich der E-Modul auf Kosten der Zähigkeit. Mischungen mit etwa 40 Gewichtsprozent Polystyrol sind für die meisten Anwendungen schon zu spröde. Man kann meist nur 20 bis maximal 30 Gewichtsprozent Polystyrol bei noch akzeptabler Duktilität zumischen.

Sternförmige Blockcopolymere mit 40 Gew.-% Hartblöcken aus vinylaromatischen Monomeren und Weichblöcken mit statistischem Aufbau aus vinylaromatischen Monomeren und Dienen sind in WO 00/58380 beschrieben. Zur Erhöhung der Steifigkeit werden sie mit Standardpolystyrol abgemischt, wobei die Transparenz abnimmt. Sie ergeben selbst mit 60 Gewichtsprozent Polystyrol noch duktile Mischungen. Der Nachteil dieser Abmischungen ist die deutlich sichtbare Trübung, die für anspruchsvollere Anwendungen und dickere Teile unakzeptabel ist.

Die WO 2006/074819 beschreibt Mischungen von 5 bis 50 Gew.-% eines Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält, und 95 bis 50 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glastemperatur Tg_{B} im Bereich von -70° bis 0°C enthält, zur Herstellung von Schrumpffolien. Die Mischungen haben eine Steifigkeit im Bereich von 700 bis maximal 1300 MPa.

Die EP-A 1 669 407 beschreibt Mischungen aus linearen Blockcopolymeren aus vinylaromatischen Monomeren und Dienen der Struktur (I) S1-B1-S2 und (II) B2-S3. Die Blöcke B1 und B2 können ausschließlich aus Dienen oder aus Dienen und vinylaromatischen Monomeren aufgebaut sein. Das Gewichtsverhältnis vinylaromatisches Monomer/Dien liegt für die Blöcke B1 und B2 bevorzugt im Bereich von 0,3 bis 1,5.

Die noch unveröffentlichte PCT/EP2008/061635 beschreibt transparente und zäh steife Formmassen auf Basis von Styrol-Butadien-Blockcopolymer-Mischungen, welche unter anderem 0 bis 30 Gew.-% eines Blockcopolymeren, welches mindestens einen Copolymerblock (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40 bis 90 C und mindestens einen Copolymerblock (B/S)_{B} aus jeweils 1 bis 60 Gew.-% vinylaromatischen Monomeren und 99 bis 40 Gew.-% Dienen und einer Glasübergangstemperatur Tg_{B} im Bereich von -100 bis 0°C, enthalten können.

Durch Abmischen von herkömmlichen Styrol-Butadien-Blockcopolymeren, beispielsweise Styrolux® mit Polystyrol kann je nach Mischungsverhältnis ein beliebiger Elastizitätsmodul von bis zu über 3000 MPa eingestellt werden. Erfahrungsgemäß bricht die Duktilität bei einem Elastizitätsmodul von über 1900 MPa jedoch völlig ein. Die Mischungen weisen dann ein ähnliches mechanisches Verhalten wie Polystyrol selbst auf und bieten gegenüber diesem keine Vorteile mehr.

Für Blisterverpackungen, tiefgezogene Behältnisse und Becher, Verpackungsmaterialien für elektronische Bauteile, wie extrudierte Hohlprofile, die als Transportröhren für Integrierte Schaltkreise eingesetzt werden, ist eine Kombination von hoher Steifigkeit und Duktilität in Verbindung mit sicherem Überschreiten der Streckspannung und guter Transparenz erforderlich. Für diese Anwendungen waren bisher Polystyrol und dessen Mischungen mit Styrol-Butadien-Blockcopolymeren nicht oder nur bedingt geeignet. Der Markt wurde bisher von Polyvinylchlorid (PVC), teilweise Polyethylenterephthalaten (PET) oder sehr teuren Spezialpolymeren abgedeckt.

Aufgabe der Erfindung war es, Blockcopolymere zu finden, die mit Polystyrolen zu transparenten und zäh-steifen Formmassen verarbeitbar sind. Die Mischungen sollten zu Formmassen mit hoher Steifigkeit verarbeitbar sein und insbesondere einen Elastizitätsmodul (E-Modul) von mehr als 1900 bis 2500 MPa in Kombination mit einer gewissen Duktilität im Zugversuch aufweisen.
Demgemäß wurde das oben genannte Blockcopolymer A, sowie Mischungen mit weiteren Styrolpolymeren gefunden.
Überraschend wurde nun gefunden, dass das erfindungsgemäße Blockcopolymer A, das einen oder mehrere Blöcke S/B mit einer Glasübergangstemperatur im Bereich von 5 bis 30°C enthält, in Formmassen aus Polystyrol oder Polystyolblöcke enthaltenden Polymeren die Weichphase bildet und eine gegenüber herkömmlichen Formmassen aus Blockcopolymeren mit butadienreichen Blöcken eine stark erhöhte Streckspannung und einen höheren E-Modul bei gleichzeitiger Duktilität aufweist.
Das erfindungsgemäße Blockcopolymer A weist ein gewichtsmittleres Molekulargewicht M_{w} von mindestens 100.000 g/mol auf und enthält
a) mindestens einen Block S aus 95 bis 100 Gew.-% vinylaromatischen Monomeren und 0 bis 5 Gew.-% Dienen und
b) mindestens einen Copolymerblock (S/B)_{A} aus 70 bis 75 Gew.-% Styroleinheiten und 25 bis 30 Gew.-% Butadieneinheiten mit einer Glasübergangstemperatur Tg_{A} im Bereich von 5 bis 30°C, und
c) mindestens einen Copolymerblock (S/B)_{B} aus 30 bis 50 Gew.-% Styroleinheiten und 50 bis 70 Gew.-% Butadieneinheiten mit einer Glasübergangstemperatur Tg_{B} im Bereich von 0 bis -80°C,
wobei der Gewichtsanteil der Summe aller Blöcke S im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Blockcopolymer A, liegt, und das Blockcopolymer eine lineare Struktur mit der Blockfolge Si-(S/B)_{A}-(S/B)_{B}-S₂ aufweist, wobei S₁ und S₂ jeweils für einen Block S stehen.
Als vinylaromatische Monomere kommen beispielsweise Styrol, alpha-Methylstyrol, kernalkylierte Styrole wie p-Methylstyrol oder Tertiärbutylstyrol, oder 1,1-Diphenylethylen oder Mischungen davon in Betracht. Bevorzugt wird Styrol eingesetzt.

Bevorzugte Diene sind Butadien, Isopren, 2,3-Dimethylbutadien, 1,3-Pentadien, 1,3-Hexadien oder Piperylen oder deren Mischungen. Besonders bevorzugt sind Butadien und Isopren.

Die gewichtsmittlere Molmasse M_{w} des Blockcopolymeren liegt bevorzugt im Bereich von 250.000 bis 350.000 g/mol.

Bevorzugt bestehen die Blöcke S aus Styroleinheiten. Bei den durch anionische Polymerisation hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird das gewichtsmittlere Molekulargewicht M_{W} über die Polymerisationstemperatur und/oder den Zusatz von Reglern eingestellt.

Die Glasübergangstemperatur des Copolymerblocks (S/B)_{A} liegt bevorzugt im Bereich von 5 bis 20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Der Copolymerblock (S/B)_{A} besteht aus 70 bis 75 Gew.-% Styrol und 25 bis 30 Gew.-% Butadien.

Bevorzugt werden Blockcopolymere, welche einen Copolymerblock (S/B)_{A} aus Styrol und Butadien mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Besonders bevorzugt sind cyclohexanlösliche Alkoholate wie Kaliumtertiärbutylamylat, die in einem Lithium-Kalium-Verhältnis von bevorzugt 30:1 bis 40:1 eingesetzt werden. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Die gewichtsmittlere Molmasse M_{w} des Copolymerblocks (S/B)_{A} liegt in der Regel im Bereich von 30.000 bis 200.000 g/mol, bevorzugt im Bereich von 50.000 bis 100.000 g/mol.

Statistische Copolymere (S/B)_{A} können aber auch durch radikalische Polymerisation hergestellt werden.

Die Blöcke (S/B)_{A} bilden in der Formmasse bei Zimmertemperatur (23°C) eine halbharte Phase aus, welche für die hohe Duktilität und Reißdehnungen, d.h. hohe Dehnung bei geringer Dehngeschwindigkeit, verantwortlich sind.

Die Glasübergangstemperatur des Copolymerblocks (S/B)_{B} liegt bevorzugt im Bereich von -60 bis -20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Der Copolymerblock (S/B)_{B} besteht aus 30 bis 50 Gew.-% Styrol und 50 bis 70 Gew.-% Butadien.

Bevorzugt werden Blockcopolymere , welche einen Copolymerblock (S/B)_{B} aus Styrol und Butadien mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Statistische Copolymere (S/B)_{B} können aber auch durch radikalische Polymerisation hergestellt werden.

Die eine Weichphase bildenden Blöcke (S/B)_{B} können über ihre gesamte Länge einheitlich oder in unterschiedlich zusammengesetzte Abschnitte aufgeteilt sein. Möglich sind Gradienten mit sich kontinuierlich änderndem Monomerverhältnis, wobei der Gradient mit einem hohen Butadienantell beginnen kann und der Styrolanteil bis 50% ansteigen kann. Auch die Abfolge von zwei oder mehreren Gradientenabschnitten ist möglich. Gradienten können durch Unter- oder Überdosierung des Randomizers erzeugt werden. Bevorzugt ist die Einstellung eines Lithium-Kalium-Verhältnisses von größer als 40:1 oder bei Verwendung von Tetrahydrofuran (THF) als Randomizer eine THF-Menge von weniger als 0,25 Vol-% bezogen auf das Polymerisationslösungsmittel. Eine Alternative ist die bezogen auf die Polymerisationsgeschwindigkeit langsame, gleichzeitige Dosierung von Butadien und Styrol, wobei das Monomerverhältnis entsprechend dem angestrebten Zusammensetzungsprofil entlang des Weichblocks gesteuert wird.

Die gewichtsmittlere Molmasse M_{w} des Copolymerblocks (S/B)_{B} liegt in der Regel im Bereich von 50.000 bis 100.000 g/mol, bevorzugt im Bereich von 10.000 bis 70.000 g/mol,

Der Gewichtsanteil der Summe aller Blöcke S liegt im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Blockcopolymer A.

Das Gewichtsverhältnis der Copolymerblöcke (S/B)_{A} zu den Copolymerblöcken (S/B)_{B} liegt bevorzugt im Bereich von 80 : 20 bis 50 : 50.

Blockcopolymere A (Tetrablockcopolymere) zeichnen sich durch einen hohen E-Modul von 1500 bis 2000 MPa, eine hohe Streckspannung im Bereich von 35 bis 42 MPa und eine Bruchdehnung von über 30% in Mischungen mit einem Polystyrolanteil von über 80 Gew.-% aus. Kommerzielle SBS-Blockcopolymere mit diesem Polystyrolanteil zeigen zum Vergleich eine Bruchdehnung von nur 3-30%.

Die Tetrablockcopolymere der Struktur S₁-(S/B)_{A}-(S/B)_{B}-S₂ enthalten einen Block (S/B)_{A} aus 70 bis 75 Gew.-% Styroleinheiten und 25 bis 30 Gew.-% Butadieneinheiten und einen Block (S/B)_{B} aus 30 bis 50 Gew.-% Styroleinheiten und 50 bis 70 Gew.-% Butadieneinheiten. Die Glasübergangstemperaturen können mit DSC bestimmt oder nach der Gordon-Taylor-Gleichung berechnet werden und liegen bei dieser Zusammensetzung im Bereich von 1 bis 10°C. Der Gewichtsanteil der Summe der Blöcke S₁ und S₂, bezogen auf das Tetrablockcopolymer, beträgt bevorzugt 50 bis 67 Gew.-%. Das Gesamtmolekulargewicht liegt vorzugsweise im Bereich von 150.000 bis 350.000 g/mol, besonders bevorzugt im Bereich von 200.000 bis 300.000 g/mol. Bedingt durch die molekulare Architektur können hier Bruchdehnungen von bis zu 300% bei einem Styrolanteil von über 85% erreicht werden.

Blockcopolymere A, welche aus den Blöcken S, (S/B)_{A} und (S/B)_{B} aufgebaut sind, erfindungsgemäß Tetrablockcopolymere der Struktur S₁-(S/B)_{A}-(S/B)_{B}-S₂. bilden eine Cokontinuierliche Morphologie aus. Hier sind drei Verschiedene Phasen in einem Polymermolekül vereint. Die aus den (S/B)_{B}-Blöcken gebildete Weichphase vermittelt in der Formmasse die Schlagzähigkeit und eignet sich zum Abfangen von Rissbildungen (Crazes). Die aus den Blöcken (S/B)_{A} gebildete halbharte Phase ist für die hohe Duktilität und Reißdehnungen verantwortlich. Über den Anteil der aus den Blöcken S und gegebenenfalls zugemischtem Polystyrol gebildeten Hartphase kann der E-Modul und die Streckspannung eingestellt werden.

Erfindungsgemäße Blockcopolymere A bilden in der Regel mit Standardpolystyrol nanodisperse, mehrphasige hochtransparente Mischungen aus.

Das erfindungsgemäße Blockcopolymer eignet sich als Komponente K1) in transparenten, zäh-steifen Formmassen mit Polystyrol als Komponente K2) und ggf. mit einen von K1 verschiedenen-Blockcopolymeren K3).

Eine bevorzugte Mischung besteht aus den Komponenten
K1) 20 bis 95 Gew.-% eines Blockcopolymeren A wie oben beschrieben, und
K2) 5 bis 80 Gew.-% Standardpolystyrol (GPPS) oder Schlagzähpolystyrol (HIPS), und
K3) 0 bis 50 Gew-%, bevorzugt 10 bis 30 Gew.-% eines von K1 verschiedenen Blockcopolymeren B aus vinylaromatischen Monomeren und Dienen.

In Formmassen mit dieser Mischung bildet der Block mit einer Glasübergangstemperatur unter -30°C der Komponenten K3) die Weichphase und die Hartphase wird aus mindestens zwei verschiedenen Domänen gebildet, welche aus Polystyrol bzw. einem Polystyrolblock und dem Block (S/B)_{A} des Blockcopolymeren der Komponente K1) bestehen.

### Komponente K1)

Als Komponente K1) wird das oben beschriebene, erfindungsgemäße Blockcopolymer A eingesetzt.

### Komponente K2)

Als Komponente K2) wird ein Styrolpolymer, vorzugsweise Standardpolystyrol (GPPS) oder Schlagzähpolystyrol (HIPS) eingesetzt. Besonders bevorzugt ist wegen des Erhalts der Transparenz Standardpolystyrol als ölfreie oder ölhaltige Variante. Geeignete Standardpolystyrole sind beispielsweise Polystyrol 158 K und Polystyrol 168 N von BASF SE bzw. deren ölhaltige Varianten Polystyrol 143 E oder Polystyrol 165 H. Bevorzugt werden 10 bis 70 Gew.-%, besonders bevorzugt 20 bis 40 Gew.-% höhermolekulare Polystyrole mit einem gewichtsmittleren Molekulargewicht M_{w} im Bereich von 220.000 bis 500.000 g/mol eingesetzt.

### Komponente K3)

Als Komponente K3) kann ein von K1) verschiedenes Blockcopolymer aus vinylaromatischen Monomeren und Dienen eingesetzt werden. Bevorzugt wird als Komponente K3) ein Styrol-Butadien-Blockcopolymer, welches einen als Weichblock wirkenden Block B mit einer Glasübergangstemperatur unter-30°C aufweist, eingesetzt.

Die erfindungsgemäße Mischung enthält bevorzugt 5 bis 45 Gew.-%, besonders bevorzugt 20 bis 40 Gew.-% des Blockcopolymeren K3.

Als Blockcopolymere K3) eignen sich insbesondere steife Blockcopolymere, welche aus 60 bis 90 Gew.-% vinylaromatischen Monomeren und 10 bis 40 Gew.-% Dien, bezogen auf das gesamte Blockcopolymer, bestehen und aus überwiegend vinylaromatischen Monomeren, insbesondere Styrol enthaltenden Hartblöcken S und Diene, wie Butadien und Isopren enthaltenden Weichblöcken B oder S/B aufgebaut sind. Besonders bevorzugt sind Blockcopolymere mit 65 bis 85 Gew.-%, besonders bevorzugt 70-80 Gew.-% Styrol und 15 bis 35 Gew.-%, besonders bevorzugt 20-30 Gew.-% Dien.

Die Copolymerblöcke (S/B)_{B} des Blockcopolymeren K3) weisen bevorzugt eine statistischer Verteilung der vinylaromatischen Monomeren und Dienen auf.

Bevorzugte Blockcopolymere K3) weisen eine sternförmige Struktur mit mindestens zwei endständigen Hartblöcke S₁ und S₂ mit unterschiedlichem Molekulargewicht aus vinylaromatischen Monomeren auf, wobei der Anteil der Summe der Hartblöcke S mindestens 40 Gew.-%, bezogen auf das gesamte Blockcopolymer B beträgt. Möglich sind auch lineare Strukturen, wie (S/B)_{B}-S₂ oder S₁-(S/B)_{B}-S₂ oder S₁-(B->S)ₙ

Bevorzugt weisen die endständigen Blöcke S₁ eine zahlenmittlere Molmasse Mₙ im Bereich von 5.000 bis 30.000 g/mol und S₂ eine zahlenmittleren Molmasse Mₙ im Bereich von 35.000 bis 150.000 g/mol auf.

Bevorzugt sind polymodale Styrol-Butadien-Blockcopolymere mit endständigen Styrolblöcken, wie sie beispielsweise in DE-A 25 50 227 oder EP-A 0 654 488 beschrieben sind.

Besonders bevorzugt werden Blockcopolymere K3) mit mindestens zwei Blöcken S₁ und S₂ aus vinylaromatischen Monomeren und mindestens einem dazwischenliegenden, statistischen Block (S/B)_{B} aus vinylaromatischen Monomeren und Dienen, wobei der Anteil der Hartblöcke über 40 Gew.-%, bezogen auf das gesamte Blockcopolymer beträgt und der 1,2-Vinylgehalt im Weichblock S/B unter 20 % beträgt, wie sie in WO 00/58380 beschrieben sind.

Die Blockcopolymeren K3) sind im Handel beispielsweise unter den Handelsbezeichnungen Styrolux® 3G 33/Styroclear® GH 62, Styrolux® 693 D, Styrolux® 684, Styrolux® 656 C, Styrolux® 3G55, K-Resin® 03, K-Resin® 04, K-Resin® 05, K-Resin® 10, K-Resin® KK38, K-Resin® 01, K-Resin® XK 40, Kraton® D 1401 P , Finaclear 520, 530, 540, 550; Asaflex® 805, 810, 825, 835, 840, 845 Asaflex® i-Serie, Clearen® 530 L und 730 L erhältlich.

### Plastifizierungsmittel

Als Plastifizierungsmittel E können 0 bis 6 Gew.-%, bevorzugt 2 bis 4 Gew.-% eines homogen mischbaren Öls oder Ölgemisches, insbesondere Weißöl, Pflanzenöle oder aliphatische Ester wie Dioktyl-Adipat oder deren Mischungen verwendet werden. Bevorzugt wird medizinisches Weißöl eingesetzt.

Die erfindungsgemäßen Mischungen sind hoch transparent und eignen sich insbesondere zur Herstellung von Folien, insbesondere von Tiefziehfolien für Blisterverpackungen und Behältnissen oder Formteilen für die Verpackung von elektronischen Bauteilen, insbesondere extrudierte Hohlprofile für Integrierte Schaltkreise (IC). Weiter eignen sie sich für die Herstellung zäh-steifer Spritzlinge.

### Beispiele:

### Prüfmethoden.

Die Glasübergangstemperaturen wurden mit Differential Scanning Calorimetrie (DSC) nach ISO 11357-2 bei einer Aufheizrate von 20K/min bestimmt
Die Molekulargewichte wurden mit Gelpermeationschromatographie (GPC) in Tetrahydrofuran (THF) bei 23°C mittels UV-Detektion bestimmt und mit Polystyrol als Standard ausgewertet.

E-Modul, Streckspannung und Reißdehnung wurden nach ISO 527 bestimmt.

### Beispiele 1 bis 5

### Blockcopolymere K1-1 bis K1-5

Zur Herstellung der linearen Styrol-Butadien-Blockcopolymeren wurden in einem doppelwandigen 10 Liter Edelstahl-Rührautoklaven mit einem Kreuzbalkenrührer 5385 ml Cyclohexan vorgelegt, bei 60°C mit 1,6 ml sec-Butyllithium (BuLi) bis zum Auftreten einer durch 1,1-Diphenylethylen als Indikator hervorgerufenen Gelbfärbung austitriert und anschließend mit 3,33 ml einer 1,4 M sec.-Butyl-Lithium-Lösung zur Initiierung und 0,55 ml einer 0,282 M Kalium-tert.-Amylat (KTA)-Lösung als Randomizer versetzt. Anschließend wurde die zur Herstellung des ersten S-Blockes benötigte Menge Styrol (420 g Styrol 1) zugegeben und auspolymerisiert. Die weiteren Blöcke wurden entsprechend der in Tabelle 1 angegebenen Struktur und Zusammensetzung durch sequentielle Zugabe der entsprechenden Mengen Styrol bzw. Styrol und Butadien und jeweiligem vollständigem Umsatz angefügt. Zur Herstellung der Copolymerblöcke wurden Styrol und Butadien gleichzeitig in mehreren Portionen zugegeben und die Maximaltemperatur durch Gegenkühlen auf 77°C begrenzt. Für Blockcopolymer K1-1 wurden hierfür 84 g Butadien 1 und 196 g Styrol 2 für den Block (S/B)_{A}, 196 g Butadien B2 und 84 g Styrol 4 für den Block (S/B)_{A} und 420 g Styrol 5 für den Block S₂.

Danach wurden die lebenden Polymerketten durch Zugabe von 0,83 ml Isopropanol terminiert, mit 1,0 % CO₂/0,5 % Wasser, bezogen auf Feststoff angesäuert und eine Stabilisatorlösung (0,2 % Sumilizer GS und 0,2 % Irganox 1010, jeweils bezogen auf Feststoff) zugegeben. Das Cyclohexan wurde im Vakuumtrockenschrank abgedampft.

Das gewichtsmittlere Molekulargewicht M_{w} für die Blockcopolymeren K1-1 bis K1-5 beträgt jeweils 300.000 g/mol.

### Mischungen M 1 bis M 8

Die in Tabelle 2 angegebenen Gewichtsteile der Blockcopolymeren K1-3 bzw. K1-4 sowie der Komponenten K2 (Polystyrol 158 K) wurden auf einem 16 mm-Zweischneckenextruder bei 200 bis 230°C gemischt und zu Platten gepresst. Die Mischungsverhältnisse und mechanischen Eigenschaften der Platten sind in Tabelle 2 zusammengestellt. Sofern nicht anders angegeben wurde die in der Kopfzeile angegebene Komponente eingesetzt.

**Tabelle 1: Struktur und Zusammensetzung der Blockcopolymeren in Gewichtsanteilen**

| Beispiel | S₁ | (S/B)_{A} | (S/B)_{B} | S₂ | S:B in (S/B)_{A} | S:B in (S/B)_{B} | Gesamtstyrolgehalt [Gew.-%] |
|---|---|---|---|---|---|---|---|
| K1-1 | 30 | 20 | 20 | 30 | 70:30 | 30:70 | 80 |
| K1-2 | 30 | 20 | 20 | 30 | 70:30 | 30:70 | 80 |
| K1-3 | 30 | 30 | 10 | 30 | 70:30 | 30:70 | 84 |
| K1-4 | 30 | 35 | 5 | 30 | 70:30 | 30:70 | 86 |
| K1-5 | 30 | 35 | 5 | 30 | 70:30 | 50:50 | 87 |

**Tabelle 2: Eigenschaften von Pressplatten**

| | K1-3 | K1-4 | K2 (PS 158K) | E-Modul [N/mm²] | Streckspannung [N/mm²] | Reißdehnung [%] |
|---|---|---|---|---|---|---|
| M1 | 90 | ----- | 10 | 1588 | 38,1 | 38,6 |
| M2 | 80 | ----- | 20 | 1659 | 40,4 | 21,7 |
| M3 | 70 | ----- | 30 | 1863 | 43,1 | 7,6 |
| M4 | 60 | ----- | 40 | 2071 | 44,4 | 4,1 |
| M5 | ----- | 90 | 10 | 1523 | 38,5 | 33,9 |
| M6 | ----- | 80 | 20 | 1723 | --- | 3,4 |
| M7 | ----- | 70 | 30 | 1899 | --- | 3,3 |
| M8 | ----- | 60 | 40 | 1988 | --- | 2,9 |

## Patentansprüche

1. Blockcopolymer A mit einem gewichtsmittleren Molekulargewicht M_{w} von mindestens 100.000 g/mol, enthaltend
a) mindestens einen Block S aus 95 bis 100 Gew.-% vinylaromatischen Monomeren und 0 bis 5 Gew.-% Dienen und
b) mindestens einen Copolymerblock (S/B)_{A} aus 70 bis 75 Gew.-% Styroleinheiten und 25 bis 30 Gew.-% Butadieneinheiten mit einer Glasübergangstemperatur Tg_{A} im Bereich von 5 bis 30°C,
c) mindestens einen Copolymerblock (S/B)_{B} aus 30 bis 50 Gew.-% Styroleinheiten und 50 bis 70 Gew.-% Butadieneinheiten mit einer Glasübergangstemperatur Tg_{B} im Bereich von 0 bis -80°C, enthält, und
wobei der Gewichtsanteil der Summe aller Blöcke S im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Blockcopolymer A, liegt, und das Blockcopolymer eine lineare Struktur mit der Blockfolge S₁-(S/B)_{A}-(S/B)_{B}-S₂ aufweist, wobei S₁ und S₂ jeweils für einen Block S stehen.

2. Blockcopolymer nach Anspruch 1, **dadurch gekennzeichnet, dass** das Gewichtsverhältnis der Copolymerblöcke (S/B)_{A} zu den Copolymerblöcken (S/B)_{B} im Bereich von 80 : 20 bis 50 : 50 liegt.

3. Blockcopolymer nach Anspruch 1 oder 2, **dadurch gekennzeichnet, dass** das gewichtsmittlere Molekulargewicht M_{w} des Blockcopolymeren im Bereich von 250.000 bis 350.000 g/mol liegt.

4. Mischung, bestehend aus
K1) 20 bis 95 Gew.-% eines Blockcopolymeren A nach einem der Ansprüche 1 bis 3, und
K2) 5 bis 80 Gew.-% Standardpolystyrol (GPPS) oder Schlagzähpolystyrol (HIPS), und
K3) 0 bis 50 Gew.-% eines von K1 verschiedenen Blockcopolymeren B aus vinylaromatischen Monomern und Dienen.

5. Mischung nach Anspruch 4, **dadurch gekennzeichnet, dass** sie 20 bis 50 Gew.-% des Blockpolymeren A und 50 bis 80 Gew.-% Standardpolystyrol enthält.

6. Verwendung der Mischung nach Anspruch 4 oder 5 zur Herstellung von Folien, insbesondere Tiefziehfolien für Blisterverpackungen, Becher oder Behältnisse, oder Formteilen, insbesondere extrudierte Hohlprofile für die Verpackung von elektronischen Bauteilen.

## Claims

1. A block copolymer with weight-average molar mass M_{w} of at least 100 000 g/mol, comprising
a) at least one block S composed of from 95 to 100% by weight of vinylaromatic monomers and from 0 to 5% by weight of dienes, and
b) at least one copolymer block (S/B)_{A} composed of from 70 to 75% by weight of styrene units and from 25 to 30% by weight of butadiene units, with glass transition temperature Tg_{A} in the range from 5 to 30°C,
c) at least one copolymer block (S/B)_{B} composed of from 30 to 50% by weight of styrene units and from 50 to 70% by weight of butadiene units, with glass transition temperature Tg_{B} in the range from 0 to -80°C, and
where the proportion by weight of the entirety of all of the blocks S is in the range from 50 to 70% by weight, and the proportion by weight of the entirety of all of the blocks (S/B)_{A} and (S/B)_{B} is in the range from 30 to 50% by weight, based in each case on the block copolymer A, and the block copolymer has a linear structure having the block sequence S₁-(S/B)_{A}- (S/B)_{B}-S₂, where each of S₁ and S₂ is a block S.

2. The block copolymer according to claim 1, wherein the ratio by weight of the copolymer blocks (S/B)_{A} to the copolymer blocks (S/B)_{B} is in the range from 80 : 20 to 50 : 50.

3. The block copolymer according to claim 1 or 2, wherein the weight-average molar mass M_{w} of the block copolymer is in the range from 250 000 to 350 000 g/mol.

4. A mixture, composed of
K1) from 20 to 95% by weight of a block copolymer A according to any of claims 1 to 3, and
K2) from 5 to 80% by weight of standard polystyrene (GPPS) or impact-resistant polystyrene (HIPS), and
K3) from 0 to 50% by weight of a block copolymer B which differs from K1 and is composed of vinylaromatic monomers and dienes.

5. The mixture according to claim 4, which comprises from 20 to 50% by weight of the block polymer A and 50 to 80% by weight of standard polystyrene.

6. The use of the mixture according to claim 4 or 5 for the production of foils, in particular thermoforming foils for blister packs, of pots, or of containers, or of moldings, in particular extruded hollow profiles, for the packaging of electronic components.

## Revendications

1. Copolymère à blocs A, présentant une masse moléculaire moyenne en masse M_{w} d'au moins 100 000 g/mol, contenant
a) au moins un bloc S constitué de 95 à 100 % en poids de monomères vinylaromatiques et de 0 à 5 % en poids de diènes, et
b) au moins un bloc de copolymère (S/B)_{A} constitué de 70 à 75 % en poids de motifs styrène et de 25 à 30 % en poids de motifs butadiène, présentant une température de transition vitreuse Tg_{A} comprise dans la plage de 5 à 30 °C,
c) au moins un bloc de copolymère (S/B)_{B} constitué de 30 à 50 % en poids de motifs styrène et de 5 à 70 % en poids de motifs butadiène, présentant une température de transition vitreuse comprise dans la plage de 0 à -80 °C, et
la proportion en poids du total de tous les blocs S étant comprise dans la plage de 50 à 70 % en poids, et la proportion en poids du total de tous les blocs (S/B)_{A} et (S/B)_{B} étant comprise dans la plage de 30 à 50 % en poids, dans chaque cas par rapport au copolymère à blocs A, et le copolymère à blocs présentant une structure linéaire, avec la séquence de blocs S₁-(S/B)_{A}-(S/B)_{B}-S₂, chacun de S₁ et de S₂ représentant un bloc S.

2. Copolymère à blocs selon la revendication 1, **caractérisé en ce que** le rapport en poids entre les blocs de copolymère (S/B)_{A} et les blocs de copolymère (S/B)_{B} est compris dans la plage de 80:20 à 50:50.

3. Copolymère à blocs selon la revendication 1 ou 2, **caractérisé en ce que** la masse moléculaire moyenne en masse M_{W} des copolymères à blocs est comprise dans la plage de 250 000 à 350 000 g/mol.

4. Mélange constitué
K1) de 20 à 95 % en poids d'un copolymère à blocs A selon l'une des revendications 1 à 3, et
K2) de 5 à 80 % en poids d'un polystyrène standard (GPPS) ou de polystyrène choc (HIPS), et
K3) de 0 à 50 % en poids d'un copolymère à blocs B différent de K1, constitué de monomères vinylaromatiques et de diènes.

5. Mélange selon la revendication 4, **caractérisé en ce qu'**il contient 20 à 50 % en poids du copolymère à blocs A et 50 à 80 % en poids de polystyrène standard.

6. Utilisation du mélange selon la revendication 4 ou 5 pour la fabrication de feuilles, en particulier de feuilles pour thermoformage destinées à des emballages blister, des gobelets ou des récipients, ou d'objets moulés, en particulier des profilés creux extrudés destinés à l'emballage de composants électroniques.
